# EUROPEAN PATENT SPECIFICATION

(11) **EP 2 565 864 B1**
(45) Date of publication and mention of the grant of the patent: **26.11.2014**
(21) Application number: 12180510.5
(22) Date of filing: 15.08.2012
(51) Int. Cl.: G09F 21/04, G09F 13/34

(54) **Display screen mounting**
Anzeigebildschirmbefestigung
Dispositif de fixation d'écran d'affichage

(30) Priority: 01.09.2011 GB 201115063
(43) Date of publication of application: 06.03.2013
(73) Proprietor: Nissan Motor Manufacturing (UK) Ltd., Cranfield Bedfordshire MK43 0DB (GB)
(72) Inventor: Barron, Peter, Cranfield, Bedfordshire MK430DB (GB)

(56) References cited:
- DE-A1-102004 018 647
- JP-A- H05 150 728
- US-A- 4 258 492

## Description

### Field of the Invention

The present invention relates to an apparatus for mounting display screens, in particular an apparatus for mounting display screens on the exterior of vehicle bodies. The invention also relates to a method of assembling such an apparatus for mounting display screens on the exterior of vehicle bodies.

### Background of the Invention

There are a variety of different types of displays that can be used to exhibit messages and advertising on the sides of vehicles such as vans, buses or trucks.

Document US 425 8492 A is considered the closest prior art.

In its simplest from, the side of a vehicle can be painted with a message but this has the drawback of not being easily changed, and is not simple to put on or remove from a vehicle. It is also possible to apply signage and display panels to the vehicle using adhesives or other fixing means such as bolts. However, such displays are difficult to install and remove in a timely fashion, and may cause damage to the vehicle body.

Furthermore, it is desirable to employ a dynamic display. Electronic billboards for vehicles are known in the art. For example, US20080088797A1 discloses a mobile display system. It is also known to modify vehicle bodies to carry plasma screen and liquid crystal (LCD) display screens.

While it is highly desirable to mount electronic display screens on a vehicle, known methods require heavy modification to the vehicle body to mount the displays. It is difficult to mount and remove such displays and the vehicle is modified away from its standard configuration, for example by drilling external mounting holes for bolts, etc. on the body panels. Such schemes require further measures to ensure that the control and electronics and power supply are protected against environmental factors such as rain and dust. It is also desirable to prevent ingress of water, dust, or other contaminants into the interior of the vehicle.

Another major drawback of all these schemes is that any such modified vehicle will need additional work to reverse any modifications and return it to standard form, which can be both costly and time consuming.

Accordingly, it is an object of the invention to provide a an apparatus for mounting electronic display screens to a vehicle body that address the above problems, and enable such screens to fitted and removed from a vehicle with minimum modifications to the vehicle body, and to provide a seal against the weather and other environmental factors.

### Summary of the Invention

According to the one aspect of the present invention there is provided an apparatus for mounting display screens as claimed in claim 1.

The apparatus allows display screens to be mounted on the exterior of a vehicle with minimum modification and/or damage to the vehicle. The need to modify the vehicle to carry the display screens is minimised, which simplifies returning the vehicle to its original condition or standard configuration.

The apparatus also provides a means for sealing the interior of the vehicle, for example, from weather and ingress of water and dust.

Preferably, the interior mounting frame of the apparatus comprise at least one weight bearing element, preferably in the form of a bracket, that can be fixed to the interior of the vehicle body by fasteners, and can further comprise at least one strengthening bracket fixed between two or more base brackets.

This arrangement allows the apparatus to be used in a variety of configurations. For example, it can be used in from smaller, lightweight set-ups to where a more robust set-up is needed, for example, providing support for a panel with multiple, or more heavyweight screens.

The screen mounting panel may be provided with access openings to provide access to the interior of the vehicle body from the exterior side of the vehicle body.

The apparatus may be provided with a moulding around the periphery of the screen mounting panel, and the moulding can hold a transparent cover over the display screens.

According to another aspect of the present invention there is provided a method as claimed in claim 11.

### Brief Description of the Drawings

The present invention will now be described, by way of example only, with reference to the accompanying drawings, in which:
Figure 1 shows a side body panel of a vehicle;
Figure 2 shows an exterior view of a matrix of display screens mounted on a side body panel of a vehicle in accordance with an embodiment of the invention;
Figure 3 shows an exterior view of an apparatus for mounting display screens;
Figure 4 shows an interior view of an apparatus for mounting display screens;
Figure 5 shows a detail of an interior view of an apparatus for mounting display screens; and
Figure 6A is sectional view of a upper portion of an apparatus for mounting display screens;
Figure 6B is sectional view of a central portion of an apparatus for mounting display screens;
Figure 6C is sectional view of an lower portion of an apparatus for mounting display screens.

### Detailed Description

In the drawings, like parts are denoted by like reference numerals.

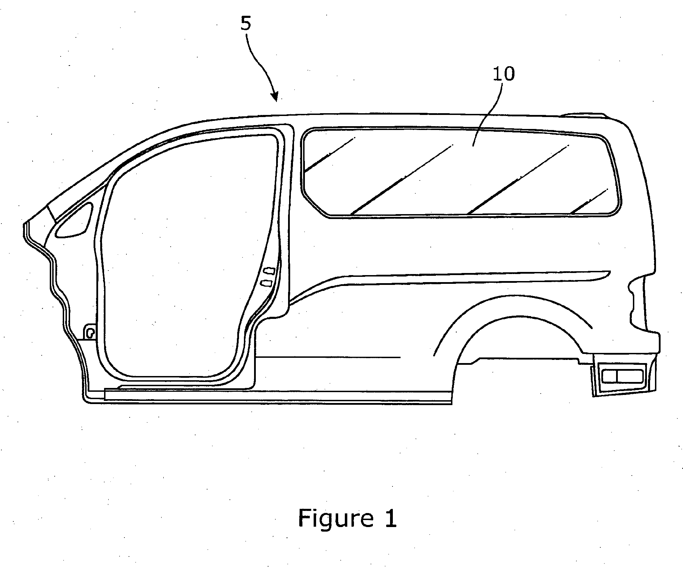

Figure 1 shows a typical side body panel assembly of a light commercial vehicle. In the example shown, the side body panel 5 has a side panel window fitting 10. It will be appreciated that such panels can have one or more windows. Alternatively, light commercial vehicles may be configured as panel vans, where the side body panel 5 is provided without windows, and a metal panel replaces the window section of the side body panel.

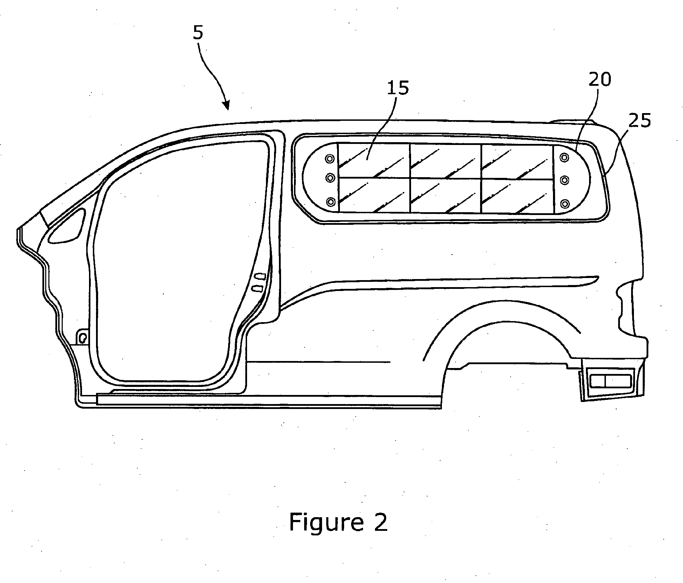

Figure 2 shows an exterior view of a matrix of individual display screens 15 mounted on the side body panel 5 of a vehicle in accordance with an embodiment of the invention. In the example shown, a 3 by 2 matrix display screen is mounted on the side body panel 5 by way of a screen mounting panel 20. The screen mounting panel is mounted onto the side body panel 5 by means of an interior mounting frame (not shown). A cosmetic panel moulding 25 is also shown here, and is provided to improve the appearance of the assembly.

The display screens 20 can be, for example, liquid crystal displays (LCDs) but may be any suitable display screen, for example, plasma screen, organic light emitting diode (OLED), or other suitable flat panel display technology.

The mounting panel is suitable for mounting different configurations of display screens, from a single display to a matrix of screens, as shown in this example.

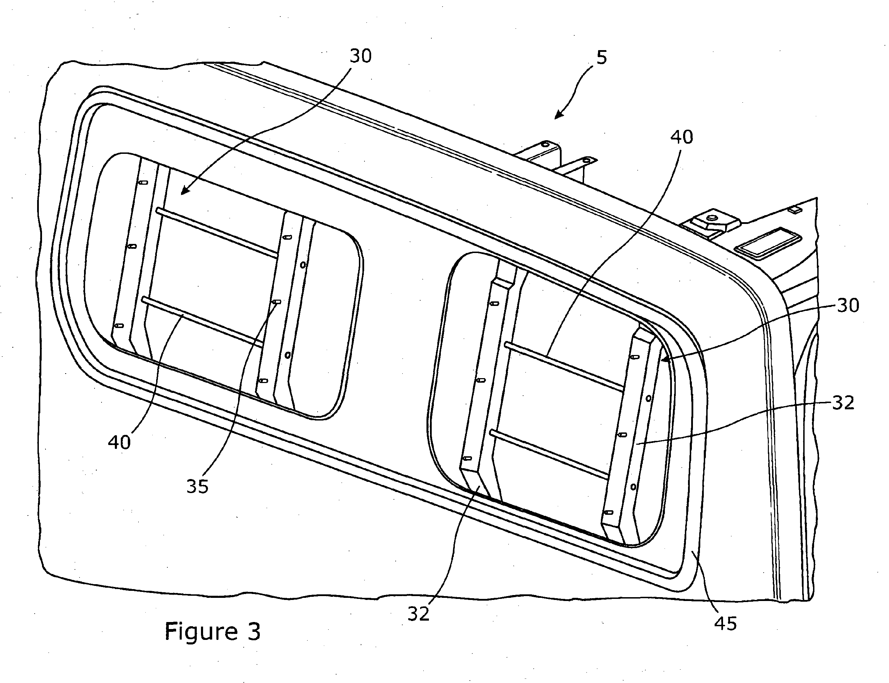

Figure 3 shows an exterior view of an apparatus for mounting display screens according to an example of the invention. The interior mounting frames 30 are shown, comprising a weight bearing structure in the form of rigid base bracket 32 with screen mounting panel fastening means 35. The base brackets 32 are shown in this example connected together by strengthening brackets 40. A body-side seal in the form of a sealing element 45 is also provided. The sealing element runs engages a continuous edge of the screen mounting panel.

In the example show, the windows of the vehicle have been removed to allow access between the interior and exterior of the vehicle. In use, displays are carried by the screen mounting panel 20 which in turn is fixed to the interior mounting frame 30 which is fixed to the interior of the vehicle. The interior mounting frame 30 in this example is fixed to the screen mounting panel 20 through the space left by the vacant window by fastening means 35.

Only the interior mounting frame needs be fixed to the vehicle body, reducing modification and/or damage to the vehicle. The frame 30 is fixed to the interior of the body, thus minimising damage to the body in general and the exterior in particular. This arrangement also aids returning the vehicle to its original condition because the apparatus needs only to be dismantled then the interior mounting frame unfixed from the interior of the vehicle, and in this case, the windows, refitted, to return the vehicle back to its original condition.

Alternatively, in the case of panel vans, only small holes through the panel are needed to allow fastening means, for example bolts, to fix the mounting panel to the interior mounting frame, again minimising modification and/or damage to the vehicle and simplifying returning the vehicle to its original condition.

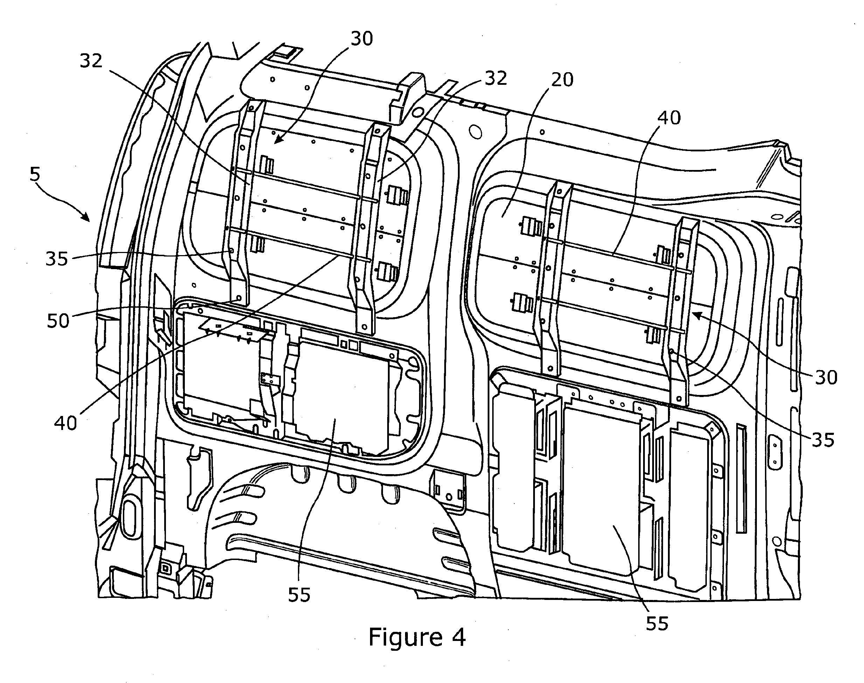

Figure 4 shows an interior view of an apparatus for mounting the display screens as shown in Figures 2 and 3. This shows the interior of the side body panel 5 and the screen mounting panel 20.

Two interior mounting frames 30 are shown. The screen mounting panel 20 is attached to an interior mounting frame 30 by fastening means 35. The fastening means may be bolts, screws or any suitable fastener for fixing together the mounting panel 20 and interior mounting frame 30. The strengthening brackets 40 add structural rigidity to the interior mounting frame 30.

The interior mounting frame is fixed to the interior of the side body panel by fastening means 50, for example bolts.

Also shown in Figure 4 are power and control modules 55 which provide the control electronics and power supply for the display screens.

Although the interior mounting frames 30 are shown in this example comprising base bracket 32 connected together by strengthening brackets 40, other configurations are possible. For example, a base bracket 32 could be used singly, or in other number, to secure the display mounting panel 20, with or without using strengthening brackets 40.

Other alternative configurations for the interior mounting frames are possible. For example, a sheet metal construction could be used.

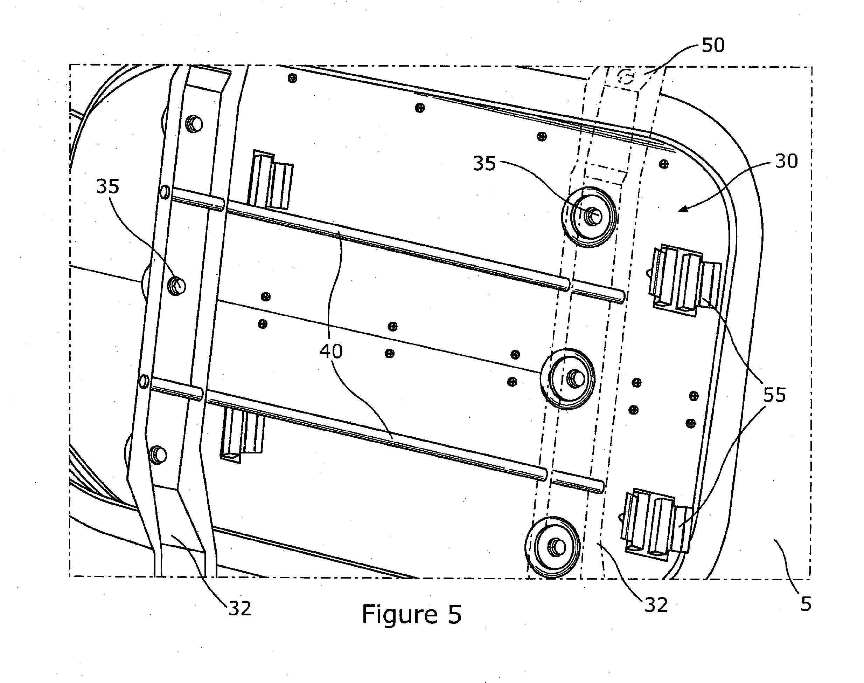

Figure 5 is more detailed view of the screen mounting panel 20 and interior mounting frame 30. This view clearly shows the fastening means 35 which fix the screen mounting panel 20 and interior mounting frame 30 together. This view also shows connectors 55 provide electrical and control communication from the interior of the vehicle to the exterior. These connectors may be any kind fit for the purpose, for example, power cable and ribbon cable connectors.

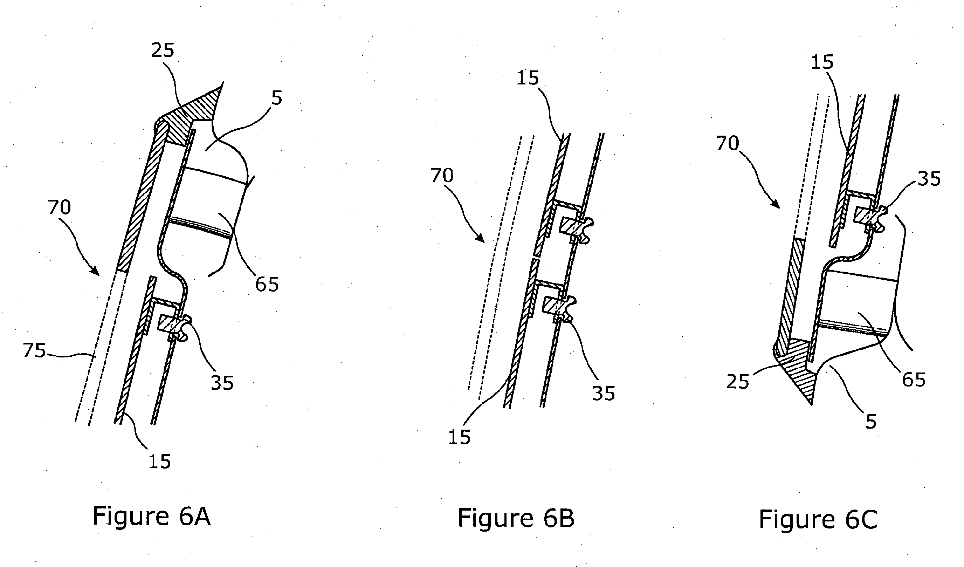

Figures 6A to 6B show a series of sectional views of an apparatus for mounting display screens as depicted in Figures 2 to 5. Figure 6A shows the upper portion of the apparatus, 6B a central portion, and 7C a lower portion.

Figures 6A to 6C show display screens 15 fixed to a display screen mounting panel 20 by screen mounting fasteners 60. A sealing element 45 is disposed between the mounting panel 20 and the exterior of the side body panel. This is fitted to provide the interior of the vehicle with a weather proof seal and to prevent ingress of water, dust and other contaminants. The sealing element 45 can be held in place by pressure between the display mounting panel 20 and side body panel 5. Alternatively, it can be glued in place. The fasteners 35 shown are wingnut fasteners but any suitable fastener can be used.

Also shown in Figures 6A to 6C is an exterior glass assembly 70 comprising a glass pane 75 and moulding 25. The assembly 70 protect the display screens from weather and other adverse conditions. It will be appreciated that the glass pane may be replaced by any suitable sheet of material, for example plastics such as Polymethyl methacrylate (PMMA).

Various modifications will be apparent to those skilled in the art. For example, it will be understood that the apparatus herein disclosed is also suitable for other mounting display screens on other body panels of vehicles, for example, on the rear of a vehicle.

## Claims

1. An apparatus for mounting at least one display screen on the exterior of a vehicle body comprising:
at least one interior mounting frame,
a screen mounting panel for carrying a display screen, and a
a sealing member,
wherein the interior mounting frame is fixed to the interior of the vehicle body and the screen mounting panel is fixed to the interior mounting frame, and
the sealing member is secured between the screen mounting panel and the outer vehicle body.

2. An apparatus as claimed in claim 1 wherein the interior mounting frame comprises at least one weight bearing element.

3. An apparatus as claimed in claim 2 wherein the weight bearing element is a base bracket.

4. An apparatus as claimed in claim 2 wherein the weight bearing element is constructed of sheet metal.

5. An apparatus as claimed in any preceding claim wherein the weight bearing element is fixed to the interior of the vehicle body by fasteners.

6. An apparatus as claimed in any preceding claim wherein the interior mounting frame further comprises at least one strengthening bracket fixed between two or more weight bearing elements.

7. An apparatus as claimed in any preceding claim wherein the screen mounting panel is fixed to the interior mounting frame through fasteners.

8. An apparatus as claimed in any preceding claim wherein the display screen is attached to the screen mounting panel through fasteners.

9. An apparatus as claimed in any preceding claim wherein the screen mounting panel is provided with access openings to provide access to the interior of the vehicle body from the exterior side of the vehicle body.

10. An apparatus as claimed in any preceding claim wherein there is further provided a moulding around the periphery of the screen mounting panel.

11. An apparatus as claimed in claim 8 wherein the moulding holds a transparent cover over the display screens.

12. An apparatus as claimed in any preceding claim wherein there is further provided enclosures for electrical equipment.

13. A method of assembling a mounting for a display screen according to claim 1 to the outside of a vehicle body comprising:
fixing an interior mounting frame to the interior of a vehicle body;
mounting a screen mounting panel for carrying a display screen on the exterior of the vehicle;
fixing the screen mounting panel to the interior mounting frame and securing a sealing member between the screen mounting panel and the outer vehicle body.

## Patentansprüche

1. Vorrichtung zum Anbringen mindestens eines Bildschirms an der Außenseite einer Fahrzeugkarosserie, Folgendes umfassend:
mindestens einen Innenmontagerahmen,
eine Bildschirmmontageplatte zum Tragen des Bildschirms,
ein Dichtungselement,
wobei der Innenmontagerahmen an der Innenseite der Fahrzeugkarosserie montiert ist und die Bildschirmmontageplatte am Innenmontagerahmen montiert ist und
das Dichtungselement zwischen der Bildschirmmontageplatte und der Außenseite der Fahrzeugkarosserie eingesetzt ist.

2. Vorrichtung nach Anspruch 1, wobei der Innenmontagerahmen mindestens ein lasttragendes Bauteil aufweist.

3. Vorrichtung nach Anspruch 2, wobei das lasttragende Bauteil eine Basishalterung ist.

4. Vorrichtung nach Anspruch 2, wobei das lasttragende Bauteil aus Metallblech gefertigt ist.

5. Vorrichtung nach einem der vorhergehenden Ansprüche, wobei das lasttragende Bauteil mittels Befestigungsmittel an der Innenseite der Fahrzeugkarosserie befestigt ist.

6. Vorrichtung nach einem der vorhergehenden Ansprüche, wobei der Innenmontagerahmen ferner mindestens eine Verstärkungshalterung umfasst, die zwischen zwei oder mehr lasttragenden Bauteilen montiert ist.

7. Vorrichtung nach einem der vorhergehenden Ansprüche, wobei die Bildschirmmontageplatte mittels Befestigungsmittel am Innenmontagerahmen angebracht ist.

8. Vorrichtung nach einem der vorhergehenden Ansprüche, wobei der Bildschirm mittels Befestigungsmittel an der Bildschirmmontageplatte angebracht ist.

9. Vorrichtung nach einem der vorhergehenden Ansprüche, wobei die Bildschirmmontageplatte Zugangsöffnungen bereitstellt, um von der Außenseite der Fahrzeugkarosserie Zugang zur Innenseite der Fahrzeugkarosserie zu ermöglichen.

10. Vorrichtung nach einem der vorhergehenden Ansprüche, wobei ferner um den äußeren Rand der Bildschirmmontageplatte eine Zierleiste bereitgestellt ist.

11. Vorrichtung nach Anspruch 8, wobei die Zierleiste eine transparente Schutzschicht über den Anzeigenbildflächen festhält.

12. Vorrichtung nach einem der vorhergehenden Ansprüche, wobei ferner Gehäuse für elektrische Betriebsmittel bereitgestellt sind.

13. Verfahren zum Zusammenbauen einer Befestigung eines Bildschirms nach Anspruch 1 an der Außenseite einer Fahrzeugkarosserie, Folgendes umfassend:
Anbringen eines Innenmontagerahmens an der Innenseite einer Fahrzeugkarosserie;
Anbringen einer Bildschirmmontageplatte an der Außenseite des Fahrzeugs zum Tragen eines Bildschirms;
Anbringen der Bildschirmmontageplatte am Innenmontagerahmen und Einsetzen eines Dichtungselements zwischen der Bildschirmmontageplatte und der Außenseite der Fahrzeugkarosserie.

## Revendications

1. Appareil de montage d'au moins un écran d'affichage sur l'extérieur d'une carrosserie de véhicule comprenant :
au moins un cadre de montage intérieur,
un panneau de montage d'écran pour soutenir un écran d'affichage, et un organe de scellement,
dans lequel le cadre de montage intérieur est fixé sur l'intérieur de la carrosserie de véhicule et le panneau de montage d'écran est fixé sur le cadre de montage intérieur, et
l'organe de scellement est fixé entre le panneau de montage d'écran et la carrosserie de véhicule externe.

2. Appareil selon la revendication 1, dans lequel le cadre de montage intérieur comprend au moins un élément porteur de poids.

3. Appareil selon la revendication 2, dans lequel l'élément porteur de poids est une console de base.

4. Appareil selon la revendication 2, dans lequel l'élément porteur de poids est réalisé en tôle métallique.

5. Appareil selon l'une quelconque des revendications précédentes, dans lequel l'élément porteur de poids est fixé sur l'intérieur de la carrosserie de véhicule par des pièces de fixation.

6. Appareil selon l'une quelconque des revendications précédentes, dans lequel le cadre de montage intérieur comprend en outre au moins une console de renforcement fixée entre deux éléments porteurs de poids ou plus.

7. Appareil selon l'une quelconque des revendications précédentes, dans lequel le panneau de montage d'écran est fixé sur le cadre de montage intérieur via des pièces de fixation.

8. Appareil selon l'une quelconque des revendications précédentes, dans lequel l'écran d'affichage est attaché au panneau de montage d'écran via des pièces de fixation.

9. Appareil selon l'une quelconque des revendications précédentes, dans lequel le panneau de montage d'écran est pourvu d'ouvertures d'accès pour fournir un accès à l'intérieur de la carrosserie de véhicule depuis le côté extérieur de la carrosserie de véhicule.

10. Appareil selon l'une quelconque des revendications précédentes, dans lequel est en outre prévu un moulage autour de la périphérie du panneau de montage d'écran.

11. Appareil selon la revendication 8, dans lequel le moulage porte un couvercle transparent sur les écrans d'affichage.

12. Appareil selon l'une quelconque des revendications précédentes, dans lequel sont en outre prévues des boîtiers pour de l'équipement électrique.

13. Procédé d'assemblage d'un montage pour un écran d'affichage selon la revendication 1 sur l'extérieur d'une carrosserie de véhicule comprenant :
la fixation d'un cadre de montage intérieur sur l'intérieur d'une carrosserie de véhicule ;
le montage d'un panneau de montage d'écran pour soutenir un écran d'affichage sur l'extérieur du véhicule ;
la fixation du panneau de montage d'écran sur le panneau de montage intérieur et la fixation d'un organe de scellement entre le panneau de montage d'écran et la carrosserie de véhicule externe.
